(19) **Europäisches Patentamt**

**European Patent Office**

**Office européen des brevets**

(11) **EP 0 854 158 B1**

(12) **EUROPÄISCHE PATENTSCHRIFT**

(45) Veröffentlichungstag und Bekanntmachung des Hinweises auf die Patenterteilung:
**14.04.2004 Patentblatt 2004/16**

(51) Int Cl.7: **C08G 18/40**, C08G 18/28, C08G 18/12, C08G 18/62

(21) Anmeldenummer: **98100053.2**

(22) Anmeldetag: **03.01.1998**

(54) **Thermoplastische Polyurethane mit eingebauten Formtrennmitteln**

Thermoplastic polyurethanes having incorporated mould release agents

Polyuréthanes thermoplastiques ayant des agents de démoulage incorporés

(84) Benannte Vertragsstaaten:
**BE DE FR GB IT NL**

(30) Priorität: **17.01.1997 DE 19701490**

(43) Veröffentlichungstag der Anmeldung:
**22.07.1998 Patentblatt 1998/30**

(73) Patentinhaber: **Bayer MaterialScience AG**
**51368 Leverkusen (DE)**

(72) Erfinder:
• **Kaufhold, Wolfgang, Dr.**
**51061 Köln (DE)**
• **Müller, Friedemann, Dr.**
**41470 Neuss (DE)**
• **Bräuer, Wolfgang, Dr.**
**51375 Leverkusen (DE)**
• **Hoppe, Hans-Georg**
**42799 Leichlingen (DE)**
• **Wussow, Hans-Georg, Dr.**
**40597 Düsseldorf (DE)**

(56) Entgegenhaltungen:
**EP-A- 0 610 714      EP-A- 0 732 349**
**US-A- 4 594 402**

**Beschreibung**

Die Erfindung betrifft thermoplastische Polyurethane mit eingebauten Formtrennmitteln. Als einbaubare Formtrennmittel werden Mischungen spezieller hydroxylterminierter Kohlenwasserstoffe eingesetzt.

Bei vielen Verfahren zur Herstellung von Formteilen aus Kunststoff ist es erforderlich, zur Verbesserung der Verformbarkeit und Verarbeitbarkeit der Kunststoffmassen Gleitmittel bzw. Formtrennmittel zuzusetzen, um zu vermeiden, daß die Formteile an der Formwandung haften. Insbesondere für die Verarbeitung von thermoplastischen Polyurethanen oder Polyurethanharnstoffen ist der Zusatz von Formtrennmitteln unverzichtbar.

Bei der Herstellung von Formteilen aus Polyurethanen werden meist Fettsäurederivate als sogenannte "innere", d.h. in der Formmasse enthaltene Trennmittel verwendet. Derartige "innere" Trennmittel für Polyurethane sind z.B. in DE-OS 23 07 589 oder DE-OS 23 19 648 beschrieben. Bei Verwendung dieser Trennmittel macht sich nachteilig bemerkbar, daß bei der Herstellung von Formteilen nach einigen Zyklen Verschmutzungen des Werkzeugs durch ausgeschwitzes Formtrennmittel auftreten, die eine Unterbrechung des Prozesses notwendig machen.

Die Trennmittel wirken selbstverständlich nur an der Produktoberfläche trennend, an die sie infolge ihrer Unverträglichkeit mit dem Polyurethan mehr oder weniger schnell wandern. Die Trennwirkung wird in der Regel mit steigendem Trennmittelgehalt besser, wobei höhere Konzentrationen zu einem unerwünschten, bei längerer Lagerung immer stärker werdenden grauen Schleier an der Produktoberfläche führen könnten. In vor der Weiterverarbeitung lange gelagertem Polyurethangranulat kann die Trennmittelkonzentration an der Oberfläche so groß werden, daß das Produkt von einem Extruder nicht gleichmäßig eingezogen wird. Außerdem ist im frisch hergestellten Teil die Trennmittelkonzentration an der Oberfläche gering, so daß sich ein großer Anteil der zugesetzten Trennmittel nur in der unerwünschten Schleierbildung auswirkt. Bei der Herstellung von Verbundwerkstoffen kann ausgeblühtes Trennmittel unter Umständen die anderen Werkstoffkomponenten schädigen.

Eine Migration und damit ein Ausblühen der Formtrennmittel läßt sich verhindern, wenn entformend wirkende Bestandteile in das Polymer eingebaut werden. In DE-OS 34 36 163 werden Kondensationsprodukte der Rizinolsäure mit Glykolen, in EP-A 310 895 spezielle Polyetherpolyole als einbaubare Formtrennmittel eingesetzt. Diese einbaubaren Trennmittel zeigen jedoch eine geringere Trennwirkung als herkömmliche Formtrennmittel oder sind nicht kommerziell verfügbar.

Es wurde nun gefunden, daß Mischungen von speziellen hydroxylterminierten Kohlenwasserstoffen sich sehr gut als einbaubare Formtrennmittel für thermoplastische Polyurethane bzw. Polyurethanharnstoffe eignen.

Gegenstand der Erfindung sind thermoplastische Polyurethane, hergestellt durch Umsetzung der Komponenten

A) organisches Diisocyanat,

B) lineares hydroxylterminiertes Polyol mit einem mittleren Molekulargewicht $\overline{M}_n$ von 500 bis 5000 g/mol,

C) Diol- oder Diamin-Kettenverlängerer mit einem mittleren Molekulargewicht $\overline{M}_n$ von 60 bis 500 g/mol,

D) 0,5 bis 10 Gew.-%, bezogen auf das Gesamtprodukt, einer Mischung aus

a) $30 \leq x \leq 95$ Gew.-% hydroxylterminiertem hydriertem Polybutadien der Formel (I)

$$HO\text{-}CH_2\text{-}CH_2\text{-}[-(CH_2\text{-}CH_2)_m\text{-}\{CH_2\text{-}CH(CH_2\text{-}CH_3)\}_n\text{-}]\text{-}CH_2\text{-}CH_2\text{-}OH \tag{I}$$

wobei das Verhältnis m/n 3:1 bis 1,33:1 betragen kann, mit einem mittleren Molekulargewicht $\overline{M}_n$ von 1000 bis 10000 g/mol, einer Funktionalität von 1,9 bis 2,0 und einem Polymolekularitätsindex $\overline{M}_w/\overline{M}_n$ von 0,8 bis 1,4,

b) $0 \leq y \leq 70$ Gew.-% hydroxylterminiertem hydriertem Polybutadien der Formel (II)

$$CH_3\text{-}CH_2\text{-}[-(CH_2\text{-}CH_2)_p\text{-}\{CH_2\text{-}CH(CH_2\text{-}CH_3)\}_q\text{-}]\text{-}CH_2\text{-}CH_2\text{-}OH \tag{II}$$

wobei das Verhältnis p/q 3:1 bis 1,33:1 betragen kann, mit einem mittleren Molekulargewicht $\overline{M}_n$ von 500 bis 10000 g/mol, einer Funktionalität von 0,9 bis 1,0 und einem Polymolekularitätsindex von $\overline{M}_w/\overline{M}_n$ 0,8 bis 1,4,

c) $0 \leq z \leq 70$ Gew.-% hydroxylterminiertem Blockcopolymer aus Polyisopren und Poly(co-ethylen-butylen-styrol) mit einem Gehalt an Styroleinheiten von ca. 40 Gew.-%, einem mittleren Molekulargewicht $\overline{M}_n$ von 500 bis 10000 g/mol, einer Funktionalität von 0,9 bis 1,0 und einem Polymolekularitätsindex $\overline{M}_w/\overline{M}_n$ von 0,8 bis 1,4,

mit $5 \leq (y+z) \leq 70$,

wobei das Molverhältnis der NCO-Gruppen in A) zu den gegenüber Isocyanat reaktiven Gruppen in B), C) und D) 0,9 bis 1,2 beträgt.

Als organische Diisocyanate A) kommen beispielsweise aliphatische, cycloaliphatische, araliphatische, heterocyclische und aromatische Diisocyanate in Betracht, wie sie in Justus Liebigs Annalen der Chemie, <u>562</u>, S.75-136 beschrieben werden.

Im einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4-cyclohexan-diisocyanat und 1-Methyl-2,6-cyclohexan-diisocyanat sowie die entsprechenden Isomerengemische, 4,4'-Dicyclohexylmethan-diisocyanat, 2,4'-Dicyclohexylmethan-diisocyanat und 2,2'-Dicyclohexylmethan-diisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendusocyanat, Isophorondiisocyanat, Dicyclohexylmethandiisocyanat, Diphenylmethandiisocyanat-Isomerengemische mit einem 4,4'-Diphenylmethandiisocyanatgehalt von >96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat oder Polyphenyl-polymethylen-polyisocyanaten.

Als Komponente B) werden lineare hydroxylterminierte Polyole mit einem mittleren Molekulargewicht $\overline{M}_n$ von 500 bis 5000 g/mol eingesetzt. Produktionsbedingt enthalten diese oft kleine Mengen an nichtlinearen Verbindungen. Häufig spricht man daher auch von "im wesentlichen linearen Polyolen". Bevorzugt sind Polyester-, Polyether-, Polycarbonat-Diole oder Gemische aus diesen.

Geeignete Polyether-Diole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyether-Diole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, daß ein thermoplastisch verarbeitbares Produkt entsteht. Die im wesentlichen linearen Polyether-Diole besitzen mittlere Molekulargewichte $\overline{M}_n$ von 500 bis 5000 g/mol. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyester-Diole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Poly-caprolactone. Die Polyester-Diole besitzen mittlere Molekulargewichte $\overline{M}_n$ von 500 bis 5000 g/mol und können einzeln oder in Form von Mischungen untereinander zur Anwendung kommen.

Als Kettenverlängerungsmittel C) werden Diole oder Diamine mit einem Molekulargewicht von 60 bis 500 g/mol eingesetzt, vorzugsweise aliphatische Diole mit 2 bis 14 Kohlenstoffatomen, wie z.B. Ethandiol, 1,6-Hexandiol, Diethylenglykol, Dipropylenglykol und insbesondere 1,4-Butandiol. Geeignet sind jedoch auch Diester der Terephthalsäure mit Glykolen mit 2 bis 4 Kohlenstoff-atomen, wie z.B. Terephthalsäurebis-ethylenglykol oder Terephthalsäurebis-1,4-butandiol, Hydroxyalkylenether des Hydrochinons, wie z.B. 1,4-Di(-hydroxyethyl)-hydrochinon, ethoxylierte Bisphenole, (cyclo)aliphatische Diamine, wie z.B. Isophorondiamin, Ethylendiamin, 1,2-Propylen-diamin, 1,3-Propylen-diamin, N-Methyl-propylen-1,3-diamin, N,N-Dimethyl-ethylendiamin und aromatische Diamine, wie z.B. 2,4-Toluylen-diamin und 2,6-Toluylen-diamin, 3,5-Diethyl-2,4-toluylen-diamin und 3,5-Diethyl-2,6-toluylen-diamin und primäre mono-, di-, tri- oder tetraalkylsubstituierte 4,4'-Diaminodiphenylmethane. Es können auch Gemische der oben genannten Kettenverlängerer eingesetzt werden. Daneben können auch kleinere Mengen an Triolen zugesetzt werden.

Weiterhin können in geringen Mengen auch übliche monofunktionelle Verbindungen eingesetzt werden, z.B. als Kettenabbrecher oder Entformungshilfen. Beispielhaft genannt seien Alkohole wie Oktanol und Stearylalkohol oder Amine wie Butylamin und Stearylamin.

Erfindungsgemäß enthalten die thermoplastischen Polyurethane als Komponente D) 0,5 bis 10 Gew.-%, bevorzugt 1 bis 5 Gew.-%, bezogen auf das Gesamtprodukt, einer Mischung aus

a) $30 \le x \le 95$ Gew.-% hydroxylterminiertem hydriertem Polybutadien der Formel (I)

$$HO-CH_2-CH_2-[-(CH_2CH_2)_m-\{CH_2-CH(CH_2-CH_3)\}_n-]-CH_2-CH_2-OH \qquad (I)$$

wobei das Verhältnis m/n 3:1 bis 1,33:1 betragen kann, mit einem mittleren Molekulargewicht $\overline{M}_n$ von 1000 bis 10000 g/mol, einer Funktionalität von 1,9 bis 2,0 und einem Polymolekularitätsindex $\overline{M}_w\backslash\overline{M}_n$ von 0,8 bis 1,4,

b) $0 \le y \le 70$ Gew.-% hydroxylterminiertem hydriertem Polybutadien der Formel (II)

$$CH_3-CH_2-[-(CH_2-CH_2)_p-\{CH_2-CH(CH_2-CH_3)\}_q-]-CH_2-CH_2-OH \qquad (II)$$

wobei das Verhältnis p/q 3:1 bis 1,33:1 betragen kann, mit einem mittleren Molekulargewicht $\overline{M}_n$ von 500 bis 10000 g/mol, einer Funktionalität von 0,9 bis 1,0 und einem Polymolekularitätsindex $\overline{M}_w\backslash\overline{M}_n$ von 0,8 bis 1,4,

c) $0 \le z \le 70$ Gew.-% hydroxylterminiertem Blockcopolymer aus Polyisopren und Poly(co-ethylen-butylen-styrol) mit einem Gehalt an Styroleinheiten von ca. 40 Gew.-%, einem mittleren Molekulargewicht $\overline{M}_n$ von 500 bis 10000 g/mol, einer Funktionalität von 0,9 bis 1,0 und einem Polymolekularitätsindex $\overline{M}_w\backslash\overline{M}_n$ von 0,8 bis 1,4, mit $5 \le (y+z) \le 70$,

wobei das Molverhältnis der NCO-Gruppen in A) zu den gegenüber Isocyanat reaktiven Gruppen in B), C) und D) 0,9 bis 1,2 beträgt.

Solche Mischungen können auch in anderen Polymeren als einbaubare Formtrennmittel eingesetzt werden. Gegenstand der Erfindung ist daher auch die Verwendung der obengenannten Mischungen aus hydroxylterminierten Kohlenwasserstoffen als Formtrennmittel in durch Polyaddition oder Polykondensation herstellbaren Polymeren, z.B. Polyamiden, Polycarbonaten oder Polyalkylenterephthalaten, insbesondere Polyurethanen bzw. Polyurethanharnstoffen.

Zur Herstellung der erfindungsgemäßen thermoplastischen Polyurethane können die Aufbaukomponenten, gegebenenfalls in Gegenwart von Katalysatoren, Hilfsmitteln und Zusatzstoffen, in solchen Mengen zur Reaktion gebracht werden, daß das Äquivalenzverhältnis von NCO-Gruppen zur Summe der NCO-reaktiven Gruppen, insbesondere der OH-Gruppen der niedermolekularen Diole/Triole und Polyole bzw. der $NH_2$-Gruppen der niedermolekularen Amine 0,9:1,0 bis 1,2:1,0, vorzugsweise 0,95:1,0 bis 1,10:1,0 beträgt.

Geeignete Katalysatoren für die Herstellung der erfindungsgemäßen thermoplastischen Polyurethane sind im Prinzip bekannt. Beispiele sind tertiäre Amine, wie z.B. Triethylamin, Dimethylcyclohexylamin, N-Methylmorpholin, N,N'-Dimethyl-piperazin, 2-(Dimethylamino-ethoxy)-ethanol, Diazabicyclo-(2,2,2)-octan, oder auch organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- oder Zinnverbindungen.

Bei der Herstellung der erfindungsgemäßen thermoplastischen Polyurethane können auch andere Hilfsmittel und Zusatzstoffe zugesetzt werden. Genannt seien beispielsweise Antiblockmittel, Inhibitoren, Stabilisatoren gegen Hydrolyse, Licht, Hitze und Verfärbung, Flammschutzmittel, Farbstoffe, Pigmente, anorganische oder organische Füllstoffe und Verstärkungsmittel. Verstärkungsmittel sind insbesondere faserartige Verstärkungsstoffe wie anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur zu entnehmen, beispielsweise J. H. Saunders, K.C. Frisch: "High Polymers", Band XVI, Polyurethane, Teil 1 und 2, Interscience Publishers 1962 bzw. 1964, R.Gächter, H.Müller (Ed.): Taschenbuch der Kunststoff-Additive, 3.Ausgabe, Hanser Verlag, München 1989, oder DE-A 29 01 774.

Die erfindungsgemäßen thermoplastischen Polyurethane können nach im Prinzip bekannten Verfahren hergestellt werden, beispielsweise im sogenannten Extruderverfahren, z.B. in einem Mehrwellenextruder. Die Dosierung der Komponenten kann gleichzeitig, d.h. im one-shot-Verfahren, oder nacheinander, d.h. nach einem Prepolymer-Verfahren, erfolgen. Dabei kann das Prepolymer sowohl batchweise vorgelegt, als auch kontinuierlich in einem Teil des Extruders oder in einem separaten vorgeschalteten Prepolymeraggregat hergestellt werden.

### Beispiele

### TPU-Herstellung

In allen Beispielen betrug das Verhältnis von NCO-Gruppen zur Summe der isocyanatreaktiven Gruppen in Polyol, Formtrennmittel und Kettenverlängerer 1:1; Polyol und Kettenverlängerer wurden im molaren Verhältnis 1:2,65 eingesetzt.

In einem Reaktionsgefäß wurden MDI, ein Polyesterpolyol auf Basis von Adipinsäure und 1,4-Butandiol mit einem mittleren Molekulargewicht von $\overline{M}_n$ = 2250 und das entsprechende Formtrennmittel (s. Tabelle 1, Mengen sind in Gew.-% angegeben) bei 120°C bis zum vollständigen Umsatz des Polyols reagiert; die theoretische NCO-Zahl wurde bei den Versuchen innerhalb von 20-30 Minuten erreicht. Danach wurde unter Rühren 1,4-Butandiol als Kettenverlängerer zugegeben. Nach 30-60 Sekunden wurde die Reaktionsmischung auf ein beschichtetes Blech gegossen und 1 Stunde lang bei 100°C getempert. Aus dem granulierten Produkt wurden auf einer Spritzgußmaschine Formkörper hergestellt.

Als Formtrennmittel wurden verwendet:

1. Fettsäureamid (Loxamid® EBS, Henkel KGaA, Düsseldorf)

2. hydroxylterminiertes hydriertes Polybutadiendiol mit $\overline{M}_n$ = 3400 g/mol (Kraton® Liquid HPVM 2203, Shell AG)

3. hydroxylterminiertes hydriertes Polybutadienol mit $\overline{M}_n$ = 4200 g/mol (Kraton® Liquid HPVM 1203, Shell AG)

4. hydroxylterminiertes Blockcopolymer aus Isopren, Butylen und Styrol mit einem Gehalt an Styroleinheiten von ca. 40 Gew.-% und $\overline{M}_n$ = 6000 g/mol (Kraton® Liquid HPVM 1301, Shell AG)

### Prüfung der Probenkörper

### Entformungsverhalten

Die Trennwirkung beim Entformen der Probenkörper an der Spritzgußmaschine wurde bewertet und nach folgendem System klassifiziert:

1 = fällt von selbst aus der Form,
2 = läßt sich gut aus der Form entnehmen,
3 = läßt sich schlecht aus der Form entnehmen.

Es zeigt sich, daß der Austausch von Loxamid® EBS durch die erfindungsgemäßen Trennmittel zu einem vergleichbaren Entformungsverhalten führt. Die zusätzliche Zugabe von Loxamid® EBS verbessert das Entformungsverhalten nicht.

**Migration**

Dazu werden Spritzgußplatten 1 Woche lang bei konstanter Temperatur (RT, 60°C, 80°C) gelagert. Anschließend wird die Oberfläche der Platte auf Ausblühungen untersucht und das Ergebnis nach folgender Skala klassifiziert:

0 = kein Ausblühen
1 = schwaches Ausblühen
2 = mittleres Ausblühen
3 = starkes Ausblühen

Es zeigt sich, daß bei ausschließlicher Verwendung der erfindungsgemäßen Trennmittel keine Ausblühungen auftreten.

Tabelle 1

| Nr. | Formtrennmittel | Entformungs- verhalten | Migration (1 Woche) | | |
|-----|-----------------|------------------------|------|------|------|
| | | | RT | 60°C | 80°C |
| 1 | 0,4 % Loxamid EBS | 2 | 1 | 3 | 3 |
| 2 | 0,5 % HPVM 2203, 0,5 % HPVM 1203 | 2 | 0 | 0 | 0 |
| 3 | 0,5 % HPVM 2203, 0,5 % HPVM 1203, 0,4 % Loxamid EBS | 2 | 0 | 2 | 2 |
| 4 | 0,5 % HPVM 2203, 0,5 % HPVM 1301 | 2 | 0 | 0 | 0 |
| 5 | 0,5 % HPVM 2203, 0,5 % HPVM 1301, 0,4 % Loxamid EBS | 2 | 0 | 2 | 2 |

**Patentansprüche**

1.   Thermoplastische Polyurethane, hergestellt durch Umsetzung der Komponenten

A) organisches Diisocyanat,

B) lineares hydroxylterminiertes Polyol mit einem mittleren Molekulargewicht $\overline{M}_n$ von 500 bis 5000 g/mol,

C) Diol- oder Diamin-Kettenverlängerer mit einem mittleren Molekulargewicht $\overline{M}_n$ von 60 bis 500 g/mol,

D) 0,5 bis 10 Gew.-%, bezogen auf das Gesamtprodukt, einer Mischung aus

a) $30 \leq x \leq 95$ Gew.-% hydroxylterminiertem hydriertem Polybutadien der Formel (I)

$$HO\text{-}CH_2\text{-}CH_2\text{-}[\text{-}(CH_2\text{-}CH_2)_m\text{-}\{CH_2\text{-}CH(CH_2\text{-}CH_3)\}_n\text{-}]\text{-}CH_2\text{-}CH_2\text{-}OH \tag{I}$$

wobei das Verhältnis m/n 3:1 bis 1,33:1 betragen kann, mit einem mittleren Molekulargewicht $\overline{M}_n$ von 1000 bis 10000 g/mol, einer Funktionalität von 1,9 bis 2,0 und einem Polymolekularitätsindex $\overline{M}_w \backslash \overline{M}_n$ von 0,8 bis 1,4,

b) $0 \leq y \leq 70$ Gew.-% hydroxylterminiertem hydriertem Polybutadien der Formel (II)

$$CH_3\text{-}CH_2\text{-}[\text{-}(CH_2\text{-}CH_2)_p\text{-}\{CH_2\text{-}CH(CH_2\text{-}CH_3)\}_q\text{-}]\text{-}CH_2\text{-}CH_2\text{-}OH \tag{II}$$

wobei das Verhältnis p/q 3:1 bis 1,33:1 betragen kann, mit einem mittleren Molekulargewicht $\overline{M}_n$ von 500 bis 10000 g/mol, einer Funktionalität von 0,9 bis 1,0 und einem Polymolekularitätsindex $\overline{M}_w\backslash\overline{M}_n$ von 0,8 bis 1,4,

c). $0 \leq z \leq 70$ Gew.-% hydroxylterminiertem Blockcopolymer aus Polyisopren und Poly(co-ethylen-butylen-styrol) mit einem Gehalt an Styroleinheiten von ca. 40 Gew.-%, einem mittleren Molekulargewicht $\overline{M}_n$ von 500 bis 10000 g/mol, einer Funktionalität von 0,9 bis 1,0 und einem Polymolekularitätsindex $\overline{M}_w/\overline{M}_n$ von 0,8 bis 1,4,

mit $5 \leq (y+z) \leq 70$,

wobei das Molverhältnis der NCO-Gruppen in A) zu den gegenüber Isocyanat reaktiven Gruppen in B), C) und D) 0,9 bis 1,2 beträgt.

**2.** Verwendung von Mischungen aus

a) $30 \leq x \leq 95$ Gew.-% hydroxylterminiertem hydriertem Polybutadien der Formel (I)

$$HO\text{-}CH_2\text{-}CH_2\text{-}[\text{-}(CH_2\text{-}CH_2)_m\text{-}\{CH_2\text{-}CH(CH_2\text{-}CH_3)\}_n\text{-}]\text{-}CH_2\text{-}CH_2\text{-}OH \qquad (I)$$

wobei das Verhältnis m/n 3:1 bis 1,33:1 betragen kann, mit einem mittleren Molekulargewicht $\overline{M}_n$ von 1000 bis 10000 g/mol, einer Funktionalität von 1,9 bis 2,0 und einem Polymolekularitätsindex $\overline{M}_w/\overline{M}_n$ von 0,8 bis 1,4,

b) $0 \leq y \leq 70$ Gew.-% hydroxylterminiertem hydriertem Polybutadien der Formel (II)

$$CH_3\text{-}CH_2\text{-}[\text{-}(CH_2\text{-}CH_2)_p\text{-}\{CH_2\text{-}CH(CH_2\text{-}CH_3)\}_q\text{-}]\text{-}CH_2\text{-}CH_2\text{-}OH \qquad (II)$$

wobei das Verhältnis p/q 3:1 bis 1,33:1 betragen kann, mit einem mittleren Molekulargewicht $\overline{M}_n$ von 500 bis 10000 g/mol, einer Funktionalität von 0,9 bis 1,0 und einem Polymolekularitätsindex $\overline{M}_w/\overline{M}_n$ von 0,8 bis 1,4,

c) $0 \leq z \leq 70$ Gew.-% hydroxylterminiertem Blockcopolymer aus Polyisopren und Poly(co-ethylen-butylen-styrol) mit einem Gehalt an Styroleinheiten von ca. 40 Gew.-%, einem mittleren Molekulargewicht $\overline{M}_n$ von 500 bis 10000 g/mol, einer Funktionalität von 0,9 bis 1,0 und einem Polymolekularitätsindex $\overline{M}_w/\overline{M}_n$ von 0,8 bis 1,4, mit $5 \leq (y+z) \leq 70$,

als Formtrennmittel in durch Polykondensation oder Polyaddition herstellbaren Polymeren.

**Claims**

**1.** Thermoplastic polyurethanes prepared by reacting the components

A) organic diisocyanate,

B) linear hydroxyl-terminating polyol having an average molecular weight $\overline{M}_n$ of 500 to 5000 g/mol,

C) diol or diamine chain extender having an average molecular weight $\overline{M}_n$ of 60 to 500 g/mol,

D) from 0.5 to 10 wt.%, with reference to the total product, of a mixture prepared from

a) $30 \leq x \leq 95$ wt.% of hydroxyl-terminating hydrogenated polybutadiene of the formula (I)

$$HO\text{-}CH_2\text{-}CH_2\text{-}[\text{-}(CH_2\text{-}CH_2)_m\text{-}\{CH_2\text{-}CH(CH_2\text{-}CH_3)\}_n\text{-}]\text{-}CH_2\text{-}CH_2\text{-}OH \qquad (I)$$

wherein the ratio m/n may be from 3 : 1 to 1.33 : 1, having an average molecular weight $\overline{M}_n$ of 1000 to 10000 g/mol, a functionality of from 1.9 to 2.0 and a polymolecularity index $\overline{M}_w/\overline{M}_n$ of from 0.8 to 1.4,

b) $0 \leq y \leq 70$ wt.% of hydroxyl-terminating hydrogenated polybutadiene of the formula (II)

$$CH_3\text{-}CH_2\text{-}[\text{-}(CH_2\text{-}CH_2)_p\text{-}\{CH_2\text{-}CH(CH_2\text{-}CH_3)\}_q\text{-}\}\text{-}CH_2\text{-}CH_2\text{-}OH \qquad \text{(II)}$$

wherein the ratio p/q may be from 3 : 1 to 1.33 : 1, having an average molecular weight $\overline{M}_n$ of 500 to 10000 g/mol, a functionality of from 0.9 to 1.0 and a polymolecularity index $\overline{M}_w/\overline{M}_n$ of from 0.8 to 1.4,

c) $0 \leq z \leq 70$ wt.% of hydroxyl-terminating block copolymer prepared from polyisoprene and poly(co-ethylene-butylene-styrene), having a styrene unit content of approx. 40 wt.%, an average molecular weight $\overline{M}_n$ of 500 to 10000 g/mol, a functionality of from 0.9 to 1.0 and a polymolecularity index $\overline{M}_w/\overline{M}_n$ of from 0.8 to 1.4,

having $5 \leq (y+z) \leq 70$,

wherein the molar ratio of the NCO groups in A) to the groups capable of reacting with isocyanate in B), C) and D) is from 0.9 to 1.2.

2.  Use of mixtures prepared from

a) $30 \leq x \leq 95$ wt.% of hydroxyl-terminating hydrogenated polybutadiene of the formula (I)

$$HO\text{-}CH_2\text{-}CH_2\text{-}[\text{-} (CH_2\text{-}CH_2)_m\{CH_2\text{-}CH(CH_2\text{-}CH_3)\}_n\text{-}]\text{-}CH_2\text{-}CH_2\text{-}OH \qquad \text{(I)}$$

wherein the ratio m/n may be from 3 : 1 to 1.33 : 1, having an average molecular weight $\overline{M}_n$ of 1000 to 10000 g/mol, a functionality of from 1.9 to 2.0 and a polymolecularity index $\overline{M}_w/\overline{M}_n$ of from 0.8 to 1.4,

b) $0 \leq y \leq 70$ wt.% of hydroxyl-terminating hydrogenated polybutadiene of the formula (II)

$$CH_3\text{-}CH_2\text{-}[\text{-}(CH_2\text{-}CH_2)_p\text{-}\{CH_2\text{-}CH(CH_2\text{-}CH_3)\}_q\text{-}]\text{-}CH_2\text{-}CH_2\text{-}OH \qquad \text{(II)}$$

wherein the ratio p/q may be from 3 : 1 to 1.33 : 1, having an average molecular weight $\overline{M}_n$ of 500 to 10000 g/mol, a functionality of from 0.9 to 1.0 and a polymolecularity index $\overline{M}_w/\overline{M}_n$ of from 0.8 to 1.4,

c) $0 \leq z \leq 70$ wt.% of hydroxyl-terminating block copolymer prepared from polyisoprene and poly(co-ethylene-butylene-styrene), having a styrene unit content of approx. 40 wt.%, an average molecular weight $\overline{M}_n$ of 500 to 10000 g/mol, a functionality of from 0.9 to 1.0 and a polymolecularity index $\overline{M}_w/\overline{M}_n$ of from 0.8 to 1.4, having $5 \leq (y+z) \leq 70$,

as mould release agents in polymers which can be prepared by polycondensation or polyaddition.

## Revendications

1.  Polyuréthanes thermoplastiques préparés par réaction des constituants

A) diisocyanate organique,
B) polyol linéaire à terminaison hydroxyle avec un poids moléculaire moyen $\overline{M}_n$ de 500 à 5 000 g/mol,
C) agent d'allongement de chaîne de diol ou de diamine avec un poids moléculaire moyen $\overline{M}_n$ de 60 à 500 g/mol,
D) de 0,5 à 10 % en poids, rapportés au produit total, d'un mélange constitué de

a) $30 \leq x \leq 95$ % en poids de polybutadiène hydrogéné à terminaison hydroxyle de la formule (I)

$$HO\text{-}CH_2\text{-}CH_2\text{-}[\text{-}(CH_2\text{-}CH_2)_m\text{-}\{CH_2\text{-}CH(CH_2\text{-}CH_3)\}_n\text{-}]\text{-}CH_2\text{-}CH_2\text{-}OH \qquad (I)$$

le rapport m/n pouvant être compris entre 3:1 et 1,33:1, avec un poids moléculaire moyen $\overline{M}_n$ de 1 000 à 10 000 g/mol, une fonctionnalité de 1,9 à 2,0 et un indice de polymolécularité $\overline{M}_w/\overline{M}_n$ de 0,8 à 1,4,
b) $0 \leq y \leq 70$ % en poids de polybutadiène hydrogéné à terminaison hydroxyle de la formule (II)

$$CH_3\text{-}CH_2\text{-}[\text{-}(CH_2\text{-}CH_2)_p\text{-}\{CH_2\text{-}CH(CH_2\text{-}CH_3)\}_q\text{-}]\text{-}CH_2\text{-}CH_2\text{-}OH \qquad (II)$$

le rapport p/q pouvant être compris entre 3:1 et 1,33:1, avec un poids moléculaire moyen $\overline{M}_n$ de 500 à 10 000 g/mol, une fonctionnalité de 0,9 à 1,0 et un indice de polymolécularité $\overline{M}_w/\overline{M}_n$ de 0,8 à 1,4,
c) $0 \leq z \leq 70$ % en poids de copolymère séquencé à terminaison hydroxyle de polyisoprène et de poly (co-éthylène-butylène-styrène) avec une teneur en unités styrène d'environ 40 % en poids, un poids moléculaire moyen $M_n$ de 500 à 10 000 g/mol, une fonctionnalité de 0,9 à 1,0 et un indice de polymolécularité $\overline{M}_w/\overline{M}_n$ de 0,8 à 1,4,

avec $5 \leq (y+z) \leq 70$,

le rapport molaire des groupes NCO dans A) aux groupes réactifs par rapport à l'isocyanate dans B), C) et D) étant compris entre 0,9 et 1,2.

2. Utilisation de mélanges constitués de

a) $30 \leq x \leq 95$ % en poids de polybutadiène hydrogéné à terminaison hydroxyle de la formule (I)

$$HO\text{-}CH_2\text{-}CH_2\text{-}[\text{-}(CH_2\text{-}CH_2)_m\text{-}\{CH_2\text{-}CH(CH_2\text{-}CH_3)\}_n\text{-}]\text{-}CH_2\text{-}CH_2\text{-}OH \qquad (I)$$

le rapport m/n étant compris entre 3:1 et 1,33:1, avec un poids moléculaire moyen $\overline{M}_n$ de 1 000 à 10 000 g/mol, une fonctionnalité de 1,9 à 2,0 et un indice de polymolécularité $\overline{M}_w/\overline{M}_n$ de 0,8 à 1,4,
b) $0 \leq y \leq 70$ % en poids de polybutadiène hydrogéné à terminaison hydroxyle de la formule (II)

$$CH_3\text{-}CH_2\text{-}[\text{-}(CH_2\text{-}CH_2)_p\text{-}\{CH_2\text{-}CH(CH_2\text{-}CH_3)\}_q\text{-}]\text{-}CH_2\text{-}CH_2\text{-}OH \qquad (II)$$

le rapport p/q étant compris entre 3:1 et 1,33:1, avec un poids moléculaire moyen $\overline{M}_n$ de 500 à 10 000 g/mol, une fonctionnalité de 0,9 à 1,0 et un indice de polymolécularité $\overline{M}_w/\overline{M}_n$ de 0,8 à 1,4,
c) $0 \leq z \leq 70$ % en poids de copolymère séquencé à terminaison hydroxyle de polyisoprène et de poly(co-éthylène-butylène-styrène) avec une teneur en unités styrène d'environ 40 % en poids, un poids moléculaire moyen $M_n$ de 500 à 10 000 g/mol, une fonctionnalité de 0,9 à 1,0 et un indice de polymolécularité $\overline{M}_w/\overline{M}_n$ de 0,8 à 1,4, avec $5 \leq (y+z) \leq 70$,

comme agent de démoulage dans des polymères pouvant être préparés par polycondensation ou polyaddition.